# EUROPEAN PATENT APPLICATION

(11) **EP 4 722 669 A1**
(43) Date of publication of application: **08.04.2026**
(21) Application number: 25205644.5
(22) Date of filing: 30.09.2025
(51) Int. Cl.: G01J 1/42, G01J 1/02

(54) **DARK COUNT RATE MITIGATION ON AN AVALANCHE PHOTODIODE-BASED AMBIENT LIGHT SENSOR**

(30) Priority: 07.10.2024 US 202418907788
(71) Applicant: STMicroelectronics International N.V., 1228 Plan-les-Ouates, Geneva (CH)
(72) Inventor: MCLEOD, Stuart, Edinburgh, EH128QF (GB); MELLOT, Pascal, 38250 Lans en Vercors (FR); RAE, Bruce, Edinburgh, EH10 6UX (GB); DUTTON, Neale, Edinburgh, EH10 6HA (GB)
(74) Representative: Casalonga

(57) **Abstract**

An example apparatus, computer-implemented method, and electronic device comprising an ambient light sensor configured to mitigate the effects of dark count rate associated with avalanche photodiodes are provided. The example apparatus includes an exposed avalanche photodiode array, a dark avalanche photodiode array, and a controller. The exposed avalanche photodiode array is positioned to receive ambient light from an external environment. The dark avalanche photodiode array is obscured from the ambient light. The controller is configured to receive an exposed illumination count corresponding to the ambient light received at the exposed avalanche photodiode array. The controller is further configured to receive a dark illumination count corresponding to a dark count at the dark avalanche photodiode array. The controller determines an ambient light value based on a difference between the exposed illumination count and the dark illumination count.

## Description

### TECHNOLOGICAL FIELD

Embodiments of the present disclosure relate generally to avalanche photodiode-based ambient light sensors, and more particularly, to mitigating a dark count rate on an avalanche photodiode-based ambient light sensor.

### BACKGROUND

Many electronic devices may adjust settings based on the ambient light in a surrounding environment. For example, a digital camera may adjust capture settings or a digital display may adjust brightness settings based on ambient light in the surrounding environment. A common technique is to measure the ambient light in an environment and then adjust the setting of the electronic device based on the ambient light measurement.

Applicant has identified many technical challenges and difficulties associated with ambient light measurement. Through applied effort, ingenuity, and innovation, Applicant has solved problems related to measuring ambient light in a surrounding environment by developing solutions embodied in the present disclosure, which are described in detail below.

### BRIEF SUMMARY

Various embodiments are directed to an example apparatus, computer-implemented method, and electronic device comprising an ambient light sensor configured to mitigate the effects of dark count rate associated with avalanche photodiodes.

An example apparatus is provided. In some embodiments, the example apparatus comprises an exposed (first) avalanche photodiode array, a dark (second) avalanche photodiode array, and a controller. The exposed (first) avalanche photodiode array is positioned to receive ambient light from an external environment. The dark (second) avalanche photodiode array is obscured from the ambient light. The controller is configured to receive an exposed (first) illumination count corresponding to the ambient light received at the exposed (first) avalanche photodiode array; receive a dark (second) illumination count corresponding to a dark (second) count at the dark (second) avalanche photodiode array; and determine an ambient light value based on a difference between the exposed (first) illumination count and the dark (second) illumination count.

In some embodiments, the controller is further configured to: disable a first portion of avalanche photodiodes comprising the exposed avalanche photodiode array; and disable a second portion of avalanche photodiodes comprising the dark avalanche photodiode array.

In some embodiments, a first portion size corresponding to the first portion of avalanche photodiodes is equal to a second portion size corresponding to the second portion of avalanche photodiodes.

In some embodiments, the first portion size is based on an exposed avalanche photodiode array size.

In some embodiments, the first portion size is a percentage of the exposed photodiode array size.

In some embodiments, the percentage is between 15% and 35% of the first avalanche portion size.

In some embodiments, the first portion of avalanche photodiodes is based on a dark count rate associated with each exposed avalanche photodiode comprising the exposed avalanche photodiode array; and the second portion of avalanche photodiodes is based on the dark count rate associated with each dark avalanche photodiode comprising the dark avalanche photodiode array.

In some embodiments, the dark count rate associated with each avalanche photodiode corresponds to a number of dark count events generated by the avalanche photodiode.

In some embodiments, the apparatus further comprises an avalanche photodiode memory map configured to store the dark count rate for one or more avalanche photodiodes comprising the exposed avalanche photodiode array and the dark avalanche photodiode array.

In some embodiments, the controller is further configured to dynamically update the first portion size.

In some embodiments, the controller is further configured to dynamically enable and dynamically disable avalanche photodiodes comprising the first portion of avalanche photodiodes and the second portion of avalanche photodiodes based on the first portion size and the second portion size.

In some embodiments, the avalanche photodiode memory map is initialized during a configuration process.

In some embodiments, the exposed avalanche photodiode array and the dark avalanche photodiode array comprise single photon avalanche photodiodes (SPADs).

In some embodiments, the first avalanche photodiode array and the second avalanche photodiode array comprise single photon avalanche photodiodes.

In some embodiments, the exposed illumination count corresponds to a total number of exposed photon events generated by one or more exposed avalanche photodiodes of the exposed avalanche photodiode array during a capture period, and wherein the dark illumination count corresponds to a total number of dark photon events generated by one or more dark avalanche photodiodes of the dark avalanche photodiode array during the capture period.

In some embodiments, the ambient light value for the capture period is determined based at least in part on the difference between the exposed illumination count and the dark illumination count.

In some embodiments, the apparatus further comprises a metallic layer obscuring the dark avalanche photodiode array.

A computer-implemented method for determining an ambient light value is further provided. In some embodiments, the computer-implemented method comprises: receiving an exposed illumination count corresponding to ambient light received at an exposed avalanche photodiode array, wherein the exposed avalanche photodiode array is positioned to receive the ambient light from an external environment; receiving a dark illumination count corresponding to a dark count at a dark avalanche photodiode array, wherein the dark avalanche photodiode array is obscured from the ambient light; and determining the ambient light value based on a difference between the exposed illumination count and the dark illumination count.

In some embodiments, the computer-implemented method further comprises: disabling a first portion of avalanche photodiodes comprising the exposed avalanche photodiode array; and disabling a second portion of avalanche photodiodes comprising the dark avalanche photodiode array.

In some embodiments, the first portion of avalanche photodiodes is based on a dark count rate associated with each exposed avalanche photodiode comprising the exposed avalanche photodiode array; and the second portion of avalanche photodiodes is based on the dark count rate associated with each dark avalanche photodiode comprising the dark avalanche photodiode array.

An example electronic device is further provided. In some embodiments, the example electronic device comprises a housing, a display screen, and an ambient light sensor. The display screen attached to the housing, and the display screen comprising: a first side configured to emit transmitted light via a plurality of display pixels into an external environment. The ambient light sensor disposed within the housing, opposite the first side of the display screen, the ambient light sensor comprising an exposed avalanche photodiode array, a dark avalanche photodiode array, and a controller. The exposed avalanche photodiode array positioned to receive ambient light from the external environment. The dark avalanche photodiode array obscured from the ambient light. The controller configured to: receive an exposed illumination count corresponding to the ambient light received at the exposed avalanche photodiode array; receive a dark illumination count corresponding to a dark count at the avalanche dark photodiode array; and determine an ambient light value based on a difference between the exposed illumination count and the dark illumination count.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example block diagram of an ambient light sensor configured to mitigate dark count rates in accordance with an example embodiment of the present disclosure.
FIG. 2 illustrates an example embodiment of an ambient light sensor configured to mitigate dark count rates in accordance with an example embodiment of the present disclosure.
FIG. 3 illustrates an example dark count rate distribution for a plurality of avalanche photodiodes.
FIG. 4 illustrates an example embodiment of an ambient light sensor including an avalanche photodiode memory map in accordance with an example embodiment of the present disclosure.
FIG. 5 illustrates a plurality of example thresholds for disabling avalanche photodiodes with high dark count rates in accordance with an example embodiment of the present disclosure.
FIG. 6 depicts an example flowchart illustrating a method for determining an ambient light value in accordance with an example embodiment of the present disclosure.
FIG. 7 illustrates a cross-section of an example electronic device comprising an ambient light sensor in accordance with an example embodiment of the present disclosure.
FIG. 8 illustrates a block diagram of example components of a controller in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with dark count rates of avalanche photodiodes in an ambient light sensor. As understood by those of skill in the field to which the present disclosure pertains, a dark count rate in an ambient light sensor may greatly effect the accuracy, sensitivity, and reliability of the ambient light sensor. As such, there are numerous example scenarios which may benefit from increased performance of an ambient light sensor by mitigating effects of a dark count rate.

For example, many electronic devices may adjust settings based on the ambient light in a surrounding environment. For example, a digital camera may adjust capture settings based on ambient light in the environment in which an image is captured. Similarly, a mobile device may adjust the brightness of a digital display based on the ambient light in the display environment. A common technique of many of these devices is to measure the intensity of ambient light in the surrounding environment and then adjust the relevant setting based on the ambient light measurement.

Enabling dynamic setting adjustment requires continuous measurement of the ambient light of the surrounding environment. In addition, in some embodiments, the ambient light sensor may be required to operate in low light conditions. For example, the ambient light sensor may be placed under a digital display. In an instance in which the ambient light sensor is placed under the digital display the amount of ambient light received at the ambient light sensor may be greatly reduced. In addition, the ambient light received may be affected by the light generated by the digital display.

In some examples, single photon avalanche diode (SPAD) arrays have been utilized on ambient light sensors. SPADs are designed such that the absorption of even a single photon can cause impact ionization, causing an avalanche current to develop. The avalanche current may be detected and counted for each SPAD in the SPAD array. The count of SPAD outputs may be used to determine the intensity of light received at the ambient light sensor. Numerous modifications have been made to conventional integration photodiodes and SPAD arrays to enable detection of ambient light from under a digital display. However, recently, demand for ambient light sensors configured to detect ambient light at lower minimum irradiances has increased.

The various example embodiments described herein utilize various techniques to mitigate the effects of dark count rates on an ambient light sensor. In accordance with the present disclosure, an exposed avalanche photodiode array and a dark avalanche photodiode array each comprising a plurality of avalanche photodiodes may be utilized to mitigate the effects of dark count rates in the ambient light sensor. For example, an exposed avalanche photodiode array may be positioned to receive ambient light from an external environment, and an illumination count captured. The illumination count captured by the exposed avalanche photodiode array includes both photon events and dark count events. A dark count event corresponds to a avalanche photodiode generating a false positive photon detection in an instance in which no light is incident on the avalanche photodiode.

A dark avalanche photodiode array may be obscured from the ambient light, for example, by a metallic layer. An illumination count corresponding to the dark avalanche photodiode array is also captured. The illumination count associated with the dark avalanche photodiode array may only include a dark rate count. Thus, by subtracting the obscured illumination count from the exposed illumination count, the noise floor of the ambient light sensor may be reduced, increasing the sensitivity of the ambient light sensor to low light. In addition, the dark count rate of avalanche photodiodes may change with temperature and over time. Thus, by subtracting the obscured illumination count from the exposed illumination count, the ambient light sensor may be more resilient to changes in temperature and aging.

In some embodiments, portions of the exposed avalanche photodiode array and the dark avalanche photodiode array may be disabled based on a measured dark rate count. For example, during a configuration period, the dark rate count of each avalanche photodiode in the exposed avalanche photodiode array and the dark avalanche photodiode array may be measured and stored in an avalanched photodiode memory map. Depending on the desired sensitivity level a portion of the avalanche photodiodes disproportionately raising the overall dark rate count may be disabled. For example, the top twenty-five percent of avalanche photodiodes having the highest measured dark count rate may be disabled. By disabling the avalanche photodiodes generating the most dark counts, the amount of noise generated by the exposed avalanche photodiode array and dark avalanche photodiode array may be greatly reduced, enabling measurement of ambient light at lower light levels.

As a result of the herein described example embodiments and in some examples, the accuracy, reliability, and life of an ambient light sensor may be greatly increased. For example, determining a difference between an exposed illumination count and an obscured illumination count may result in an ambient light sensor that is more resilient to change in the device components over time (e.g., reliability drift). In addition, determining the difference between an exposed illumination count and an obscured illumination count may result in an ambient light sensor that is more resilient to changes in temperature. Further, reducing the noise floor by disabling underperforming avalanche photodiodes may improve performance of the ambient light sensor in low light conditions, such as under the display of an electronic device.

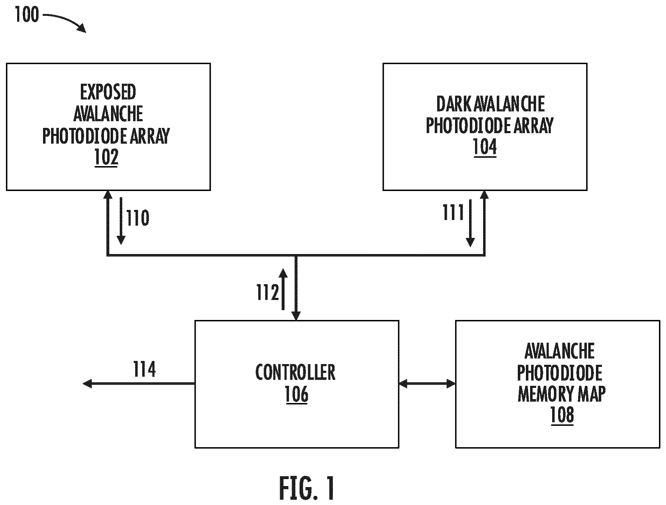

Referring now to FIG. 1, an example block diagram of an ambient light sensor 100 is provided. As depicted in FIG. 1, the example ambient light sensor 100 includes an exposed avalanche photodiode array 102 configured to transmit an exposed illumination count 110 to an electrically connected controller 106. The example ambient light sensor 100 further includes a dark avalanche photodiode array 104 configured to transmit a dark illumination count 111 to the electrically connected controller 106. As further depicted in FIG. 1, the controller 106 is configured to transmit disable avalanche photodiode signals 112 to the exposed avalanche photodiode array 102 and the dark avalanche photodiode array 104 based on an accessible avalanche photodiode memory map 108.

As depicted in FIG. 1, the example ambient light sensor 100 includes an exposed avalanche photodiode array 102. An exposed avalanche photodiode array 102 comprises any plurality of avalanche photodiodes exposed to an external environment and configured to generate an output voltage pulse in an instance in which one or more photons encounter an avalanche photodiode of the plurality of avalanche photodiodes. In some embodiments, the plurality of avalanche photodiodes may be arranged in a pattern across a surface, for example, in a two-dimensional array. The exposed avalanche photodiode array 102 is exposed to an external environment such that ambient light or other light in the external environment may be received at the plurality of avalanche photodiodes. In some embodiments, the exposed avalanche photodiode array 102 may positioned under a transparent or translucent optical structure allowing at least a portion of light to pass through, for example, a lens, screen, or digital display.

As further depicted in FIG. 1, the exposed avalanche photodiode array 102 is configured to generate an exposed illumination count 110. The exposed illumination count 110 comprises any signal or value representing the intensity of light received at the exposed avalanche photodiode array 102. In some embodiments, the exposed avalanche photodiode array 102 may receive, count, and/or accumulate output voltage pulses generated by the plurality of avalanche photodiodes during an exposure window. The output voltage pulses counted and/or accumulated may be directly proportional to the intensity of light received at the exposed avalanche photodiode array 102.

As further depicted in FIG. 1, the example ambient light sensor 100 includes a dark avalanche photodiode array 104. A dark avalanche photodiode array 104 comprises any plurality of avalanche photodiodes obscured from exposure to ambient light in an external environment. In some embodiments, a dark avalanche photodiode array 104 may comprise an opaque cover or shield preventing transmission of one or more light frequencies. For example, a metallic layer may be positioned between the dark avalanche photodiode array 104 and an external environment. In some embodiments, the opaque layer may be positioned over the dark avalanche photodiode array 104 in a photolithography process.

In some embodiments, the plurality of avalanche photodiodes comprising the dark avalanche photodiode array 104 may be arranged in a pattern across a surface, for example, in a two-dimensional array. In some embodiments, the number of avalanche photodiodes comprising the dark avalanche photodiode array 104 may be equal to the number of avalanche photodiodes comprising the exposed avalanche photodiode array 102.

As further depicted in FIG. 1, the dark avalanche photodiode array 104 is configured to generate a dark illumination count 111. Since the dark avalanche photodiode array 104 is obscured from exposure to ambient light or other light, the dark illumination count 111 corresponds to an accumulation of dark count events during the exposure window from the avalanche photodiodes comprising the dark avalanche photodiode array 104. A dark count event corresponds to an avalanche photodiode generating a false positive photon detection in an instance in which no light is incident on the avalanche photodiode. For example, due to the characteristics of an avalanche photodiode, the avalanche photodiode may generate an output voltage pulse even when no photons are received. In some embodiments, the dark avalanche photodiode array 104 may receive, count, and/or accumulate the dark count events generated by the plurality of avalanche photodiodes comprising the dark avalanche photodiode array 104 during an exposure window. The dark count events counted and/or accumulated may be output as the dark illumination count 111 by the dark avalanche photodiode array 104.

As further depicted in FIG. 1, the example ambient light sensor 100 includes a controller 106. The controller 106 comprises circuitry including hardware and/or software configured to generate an ambient light value 114 based on the exposed illumination count 110 and the dark illumination count 111. In some embodiments, the controller 106 may comprise entirely hardware components, for example, combinational logic devices. The ambient light value 114 is a value representing the intensity of ambient light encountered by the ambient light sensor 100. The ambient light value 114 may be expressed as a count corresponding to a number of output voltage pulses generated by the avalanche diodes during an exposure window. For example, a higher count may correspond to a greater intensity of ambient light received at the ambient light sensor 100.

The ambient light value 114 generated by the controller 106 may be determined based on a combination of the exposed illumination count 110 and the dark illumination count 111. For example, the controller 106 may calculate the difference between the exposed illumination count 110 and the dark illumination count 111 during a particular exposure window.

The exposed illumination count 110 corresponds to a count of exposed photon events. Exposed photon events are output voltage pulses generated by the avalanche photodiodes comprising the exposed avalanche photodiode array 102. In general, the exposed photon events include positive photon events in which one or more photons encounters an avalanche photodiode triggering an output voltage pulse, and dark count events corresponding to an avalanche photodiode generating a false positive photon detection in an instance in which no light is incident on the avalanche photodiode.

The dark illumination count 111 corresponds to a count of dark photon events. Dark photon events are output voltage pulses generated by the avalanche photodiodes comprising the dark avalanche photodiode array 104. In general, the dark photon events include only, or at least primarily, dark count events corresponding to an avalanche photodiode generating a false positive photon detection in an instance in which no light is incident on the avalanche photodiode.

Assuming that the exposed avalanche photodiode array 102 and the dark avalanche photodiode array 104 experience a correlated number of dark count events, the number of exposed photon events attributable to dark count events may be approximated by the dark illumination count 111. Thus, determining an ambient light value 114 based on the difference between the exposed illumination count 110 and the dark illumination count 111, removes the exposed photon events attributable to dark count events, mitigating the effects of the dark count rate on the ambient light value 114.

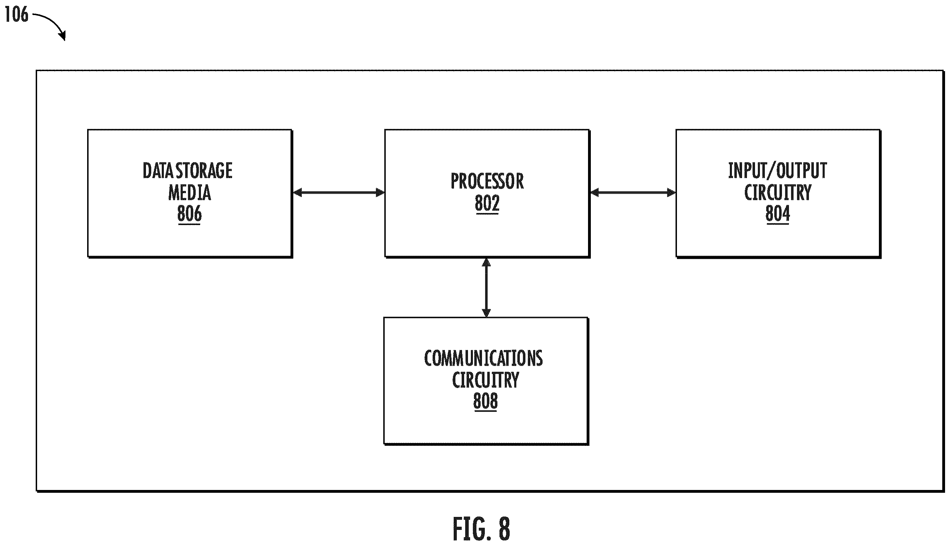

In addition, the dark count rate changes similarly on the exposed avalanche photodiode array 102 and the dark avalanche photodiode array 104 based on temperature. Thus, determining an ambient light value 114 based on the difference between the exposed illumination count 110 and the dark illumination count 111 improves the accuracy of the ambient light sensor 100 across a temperature range. Further, the dark count rate changes similarly over time on the exposed avalanche photodiode array 102 and the dark avalanche photodiode array 104. Thus, determining an ambient light value 114 based on the difference between the exposed illumination count 110 and the dark illumination count 111 improves the resilience of the ambient light sensor 100 to changes due to age. An example controller 106 architecture is further described in relation to FIG. 8.

As further depicted in FIG. 1, the example ambient light sensor 100 includes an avalanche photodiode memory map 108. The avalanche photodiode memory map 108 comprises any data structure configured to store one or more associations between a particular avalanche photodiode comprising the exposed avalanche photodiode array 102 or the dark avalanche photodiode array 104, and an observed dark count rate. An observed dark count rate refers to the number of dark count events triggered by an avalanche photodiode during a given period of time. For example, an observed dark count rate may be expressed in counts per second (cps), where counts is the number of dark count events triggered by the avalanche photodiode. An observed dark count rate may be determined during a calibration period, for example, by isolating an avalanche photodiode from light sources and counting the number of dark count events.

In some embodiments, the observed dark count rate may be associated with the particular avalanche photodiode and stored in the avalanche photodiode memory map 108. The particular avalanche photodiode may be identified based on location within the avalanche photodiode array (e.g., x, y location), or other unique identifier. The avalanche photodiode memory map 108 is accessible to the controller 106. In some embodiments, the avalanche photodiode memory map 108 may be within the memory associated with the controller 106. In some embodiments, the avalanche photodiode memory map 108 may be stored on a memory device external to the controller 106.

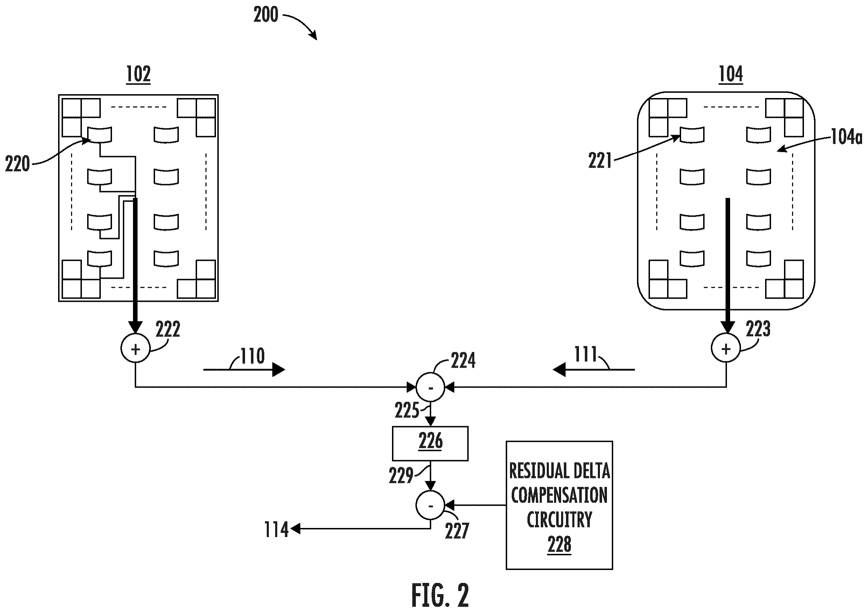

Referring now to FIG. 2, an example embodiment of an ambient light sensor 200 is provided. As depicted in FIG. 2, the example ambient light sensor 200 includes an exposed avalanche photodiode array 102 comprising a plurality of avalanche photodiodes 220 and a dark avalanche photodiode array 104 comprising a plurality of avalanche photodiodes 221. The dark avalanche photodiode array 104 further includes an opaque layer 104a positioned to block light from interacting with the avalanche photodiodes 221 comprising the dark avalanche photodiode array.

As further depicted in FIG. 2, the example ambient light sensor 200 includes adder logic 222 configured to generate an exposed illumination count 110 based on a total count of exposed photon events at the exposed avalanche photodiode array 102, and adder logic 223 configured to generate a dark illumination count 111 based on a total count of dark photon events at the dark avalanche photodiode array 104. The example ambient light sensor 200 additionally includes subtraction logic 224 configured to receive the exposed illumination count 110 and the dark illumination count 111 and output an adjusted illumination count 225 to the accumulator 226. The accumulator 226 generates an accumulated illumination count 229 based on the accumulation of one or more adjusted illumination counts 225.

As further depicted in FIG. 2, the example ambient light sensor 200 includes second subtraction logic 227 configured to generate an ambient light value 114 based on a temperature-compensated residual delta value from the residual delta compensation circuitry 228 and the accumulated illumination count 229 of the accumulator 226.

As depicted in FIG. 2, the example exposed avalanche photodiode array 102 and dark avalanche photodiode array 104 each comprise a plurality of avalanche photodiodes 220, 221. Avalanche photodiodes 220, 221 may include highly reverse biased photodiodes, single photon avalanche diodes (SPADs), or other similar photodiodes in an avalanche mode. In contrast to integration photodiodes in which charge is collected by a photodiode over an integration period, avalanche photodiodes 220, 221 are designed such that the absorption of even a single photon can cause impact ionization, causing an avalanche current to develop. The voltage generated by the impact ionization creates a voltage pulse at the output of the avalanche photodiode 220, 221. The output voltage pulse generated by the avalanche photodiode 220, 221 may be used to determine the intensity of light received at the particular avalanche photodiode array (e.g., exposed avalanche photodiode array 102, dark avalanche photodiode array 104).

As further depicted in FIG. 2, the adder logic 222, 223 are configured to receive the respective photon events generated by the exposed avalanche photodiode array 102 and the dark avalanche photodiode array 104 (e.g., exposed photon events and dark photon events). For example, the adder logic 222 accumulates exposed photon events generated by each of the avalanche photodiodes comprising the exposed avalanche photodiode array 102 and transmits an exposed illumination count 110 representing the exposed photon events generated. Similarly, the adder logic 223 transmits a dark illumination count 111 representing the dark photon events generated by each of the avalanche photodiodes in the dark avalanche photodiode array 104.

The subtraction logic 224 is configured to receive the exposed illumination count 110 and the dark illumination count 111 and perform a difference to generate an adjusted illumination count 225. As described herein, by subtracting the dark illumination count 111 from the exposed illumination count 110, the exposed photon events attributable to dark count events are effectively removed. The adjusted illumination count 225 therefore corresponds to the exposed illumination count 110 with the dark count events removed. In some embodiments, the subtraction logic 224 and associated logic may be implemented as part of the controller 106.

As further depicted in FIG. 2, the example ambient light sensor 200 includes an accumulator 226. The accumulator 226 is configured to receive the adjusted illumination count 225 transmitted by the subtraction logic 224 and accumulate the adjusted illumination count 225 over an accumulation period. In some embodiments, an ambient light sensor 200 may be configured to accumulate adjusted illumination counts 225 during one or more exposure windows. For example, an exposure window may be based on a display pattern of an adjacent digital display. Based on the specifications and/or requirements of the ambient light sensor, an accumulator 226 may be configured to accumulate adjusted inflation counts 225 over a plurality of exposure windows. Once an accumulation period has ended, the accumulated illumination counts 229 are output by the accumulator 226. In some embodiments, the accumulator 226 and associated logic may be implemented as part of the controller 106.

As further depicted in FIG. 2, the example ambient light sensor 200 may include residual delta compensation circuitry 228. The residual delta compensation circuitry 228 comprises any circuitry including hardware and/or software configured to determine a residual delta, or difference, between the exposed avalanche photodiode array 102 and the dark avalanche photodiode array 104 and adjust the accumulated illumination counts 229 based on the residual delta. The dark count rates of the exposed avalanche photodiode array 102 and the dark avalanche photodiode array 104 may not be perfectly matched, in other words, there may be a residual delta between them. The residual delta may be determined during a calibration period and stored within the ambient light sensor 200. During operation, the residual delta may be utilized to adjust the accumulated illumination counts 229.

In addition, the dark count rate varies with temperature. For example, the dark count rate may double every 8 degrees Celsius, or so. Utilizing the stored residual delta and corresponding temperature at calibration, the calibrated residual delta may further be adapted to the current operating temperature before it is applied to the accumulated illumination counts 229..

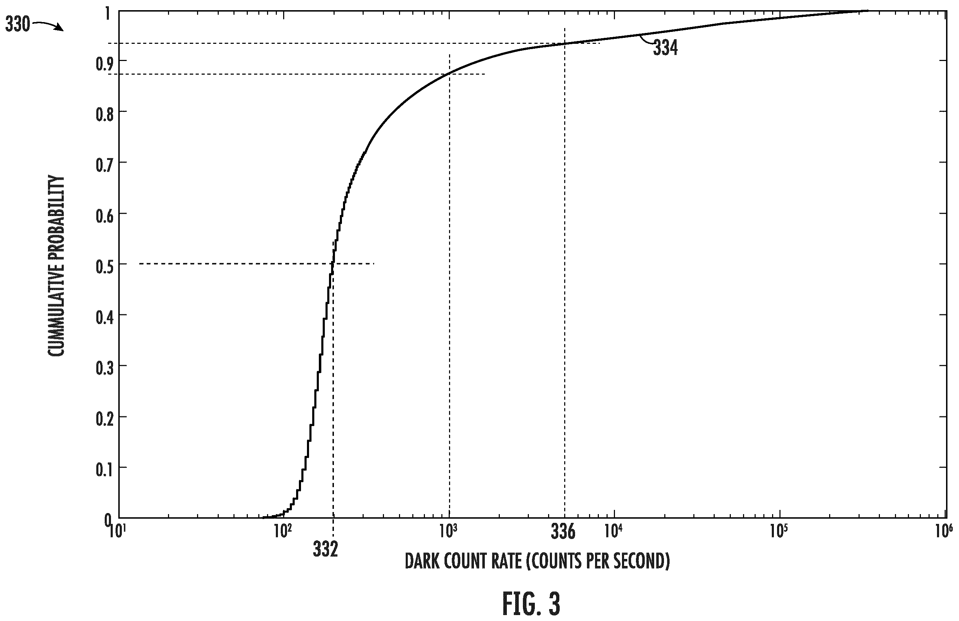

Referring now to FIG. 3, an example dark count rate distribution 330 for a plurality of avalanche photodiodes is provided. The dark count rate distribution 330 of FIG. 3 depicts the probability that a given avalanche photodiode exhibits a dark count rate at or below the particular dark count rate. For example, as shown in FIG. 3, the probability that a given avalanche photodiode exhibits a dark count rate at or below 10³ (1000) counts per second is near 0.88 (88%). The dark count rate distribution 330 may be determined based on simulating and/or otherwise testing avalanche photodiodes in a dark environment.

As depicted in FIG. 3, the median dark count rate 332 is at or below about 200 counts per second. Meaning, about half of a given set of avalanche photodiodes are likely to exhibit a dark count rate at or below 200 counts per second. However, the mean dark count rate 336 is at or near 5000 counts per second per avalanche photodiode. Meaning, during operation of an array of avalanche diodes, the diodes, on average will generate 5000 dark count events per second per avalanche photodiode. Each dark count event contributes to the noise of the ambient light sensor. The higher the noise (e.g., mean dark count rate 336), the less sensitive the ambient light sensor is to low light levels of ambient light.

The high mean dark count rate 336 as compared to the median dark count rate 332, as depicted in FIG. 3, is due to the strong tail 334 on the distribution. The strong tail 334 indicates that a relatively small number of avalanche photodiodes are disproportionately contributing to the dark count rate of the avalanche photodiode arrays of the ambient light sensor. In an example scenario, in an instance in which ten avalanche photodiodes are utilized, if nine of the photodiodes exhibit a dark count rate of 100 counts per second and one of the photodiodes exhibits a dark count rate of 10000 counts per second, the median dark count rate is 100, however, the mean dark count rate is 1090. Thus, removing the avalanche photodiode with the high dark count rate may reduce the amount of noise in the ambient light value without a significant impact on the sensitivity of the avalanche photodiode array.

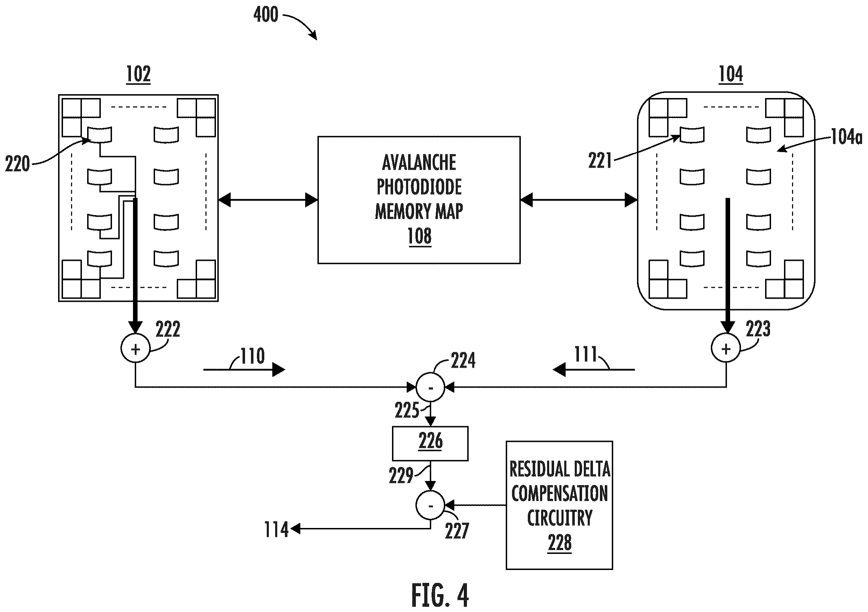

Referring now to FIG. 4, an example embodiment of an ambient light sensor 400 is provided. As depicted in FIG. 4, the example ambient light sensor 400 includes an exposed avalanche photodiode array 102 comprising a plurality of avalanche photodiodes 220 and a dark avalanche photodiode array 104 comprising a plurality of avalanche photodiodes 221. The dark avalanche photodiode array 104 further includes an opaque layer 104a positioned to block light from interacting with the avalanche photodiodes 221 comprising the dark avalanche photodiode array.

As further depicted in FIG. 4, the example ambient light sensor 400 includes adder logic 222 configured to generate an exposed illumination count 110 based on a total count of exposed photon events at the exposed avalanche photodiode array 102, and adder logic 223 configured to generate a dark illumination count 111 based on total count of dark photon events at the dark avalanche photodiode array 104. The example ambient light sensor 400 additionally includes subtraction logic 224 configured to receive the exposed illumination count 110 and the dark illumination count 111 and output an adjusted illumination count 225 to the accumulator 226. The accumulator 226 generates an accumulated illumination count 229 based on the accumulation of one or more adjusted illumination counts 225.

As further depicted in FIG. 4, the example ambient light sensor 400 includes second subtraction logic 227 configured to generate an ambient light value 114 based on a temperature-compensated residual delta value from the residual delta compensation circuitry 228 and the accumulated illumination count 229 of the accumulator 226.

As further depicted, the example ambient light sensor includes an avalanche photodiode memory map 108. An avalanche photodiode memory map 108 comprises any data structure configured to store one or more associations between a particular avalanche photodiode and an observed dark count rate. For example, in some embodiments, an observed dark count rate for each avalanche photodiode in the plurality of photodiodes comprising the exposed avalanche photodiode array 102 and dark avalanche photodiode array 104 may be determined during a calibration period, for example, by isolating an avalanche photodiode from light sources and counting the number of dark count events. The observed dark count rate may be saved in the avalanche photodiode memory map 108 and associated with the avalanche photodiode by memory location, identifier, or another identifying mechanism.

Storing the observed dark count rate of each avalanche photodiode in the plurality of photodiodes comprising the exposed avalanche photodiode array 102 and dark avalanche photodiode array 104 may enable avalanche photodiodes exhibiting high dark count rates to be disabled and/or ignored during operation of the ambient light sensor 400. For example, a portion of the avalanche photodiodes 220 of the exposed avalanche photodiode array 102 and a portion of the avalanche photodiodes 221 of the dark avalanche photodiode array 104 may be disabled based on the observed dark count rate stored in the avalanche photodiode memory map 108.

In some embodiments, a maximum dark count threshold may be determined. In such an instance, any avalanche photodiodes 220, 221 with a dark count rate exceeding the maximum dark count threshold may be disabled. For example, if a maximum dark count threshold of 1000 counts per second is determined, any avalanche photodiodes 220, 221 exhibiting a dark count rate exceeding 1000 may be disabled.

In some embodiments, the portion of the avalanche photodiodes that are disabled may be based on the number of avalanche photodiodes comprising the corresponding avalanche photodiode array (e.g., exposed avalanche photodiode array 102, dark avalanche photodiode array 104). For example, the portion of disabled avalanche photodiodes may be a percentage of the size of the corresponding avalanche photodiode array. For example, the 25% of avalanche photodiodes exhibiting the highest dark rate count may be selected for inclusion in the portion of disabled avalanche photodiodes. In some embodiments, the portion of the corresponding avalanche photodiode array may be between 15% and 35%; more preferably between 20% and 30%; most preferably between 24% and 26%.

In some embodiments, the size of the portion of disabled avalanche photodiodes for the exposed avalanche photodiode array 102 and the size of the portion of disabled avalanche photodiodes for the dark avalanche photodiode array 104 may be equivalent. Keeping the number of illumination counts utilized from the exposed avalanche photodiode array 102 and the dark avalanche photodiode array 104 may be important to the mitigation of the dark count rate when the dark illumination count 111 is subtracted from the exposed illumination count 110.

Selection of the size of the portion of disabled avalanche photodiodes requires balancing the reduced noise level due to dark count events, with the reduction in sensitivity of the ambient light sensor. Selection of the size of the portion of disabled avalanche photodiodes may depend a number of characteristics, including but not limited to requirements of the electronic device housing the ambient light sensor 400, the physical characteristics of the ambient light sensor 400, the application, and so on.

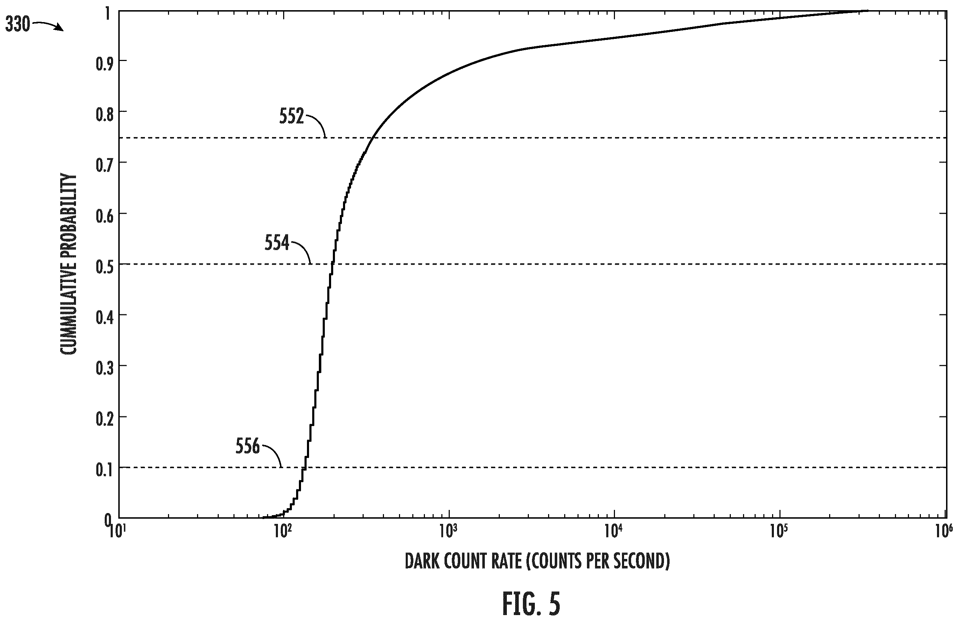

Referring now to FIG. 5, a plurality of example disabled avalanche photodiode cutoff values 552, 554, 556 are depicted with reference to the example dark count rate distribution 330. The example disabled avalanche photodiode cutoff values 552, 554, 556 depict the portion of the example dark count rate distribution 330 that may be eliminated if the size of the portion of disabled avalanche photodiodes is determined based on the disabled avalanche photodiode cutoff values 552, 554, 556. For example, disabled avalanche photodiode cutoff value 552 corresponds with disabling 25% of the avalanche photodiodes of a particular avalanche photodiode array with the highest observed dark count rates, as recorded in the avalanche photodiode memory map 108. The disabled avalanche photodiode cutoff value 554 corresponds with disabling 50% of the avalanche photodiodes of a particular avalanche photodiode array with the highest observed dark count rates, as recorded in the avalanche photodiode memory map 108. The disabled avalanche photodiode cutoff value 556 corresponds with disabling 90% of the avalanche photodiodes of a particular avalanche photodiode array with the highest observed dark count rates, as recorded in the avalanche photodiode memory map 108.

As depicted in FIG. 5, increasing the avalanche photodiode cutoff value 552, 554, 556 may have diminishing returns. For example, increasing the avalanche photodiode cutoff value from 50% to 90% may significantly reduce the number of enabled avalanche photodiodes in an avalanche photodiode array without significantly reducing the dark count rate. However, setting an avalanche photodiode cutoff value 552 at 25% may significantly reduce the dark count rate without adversely effecting the ambient light sensor sensitivity and/or resolution.

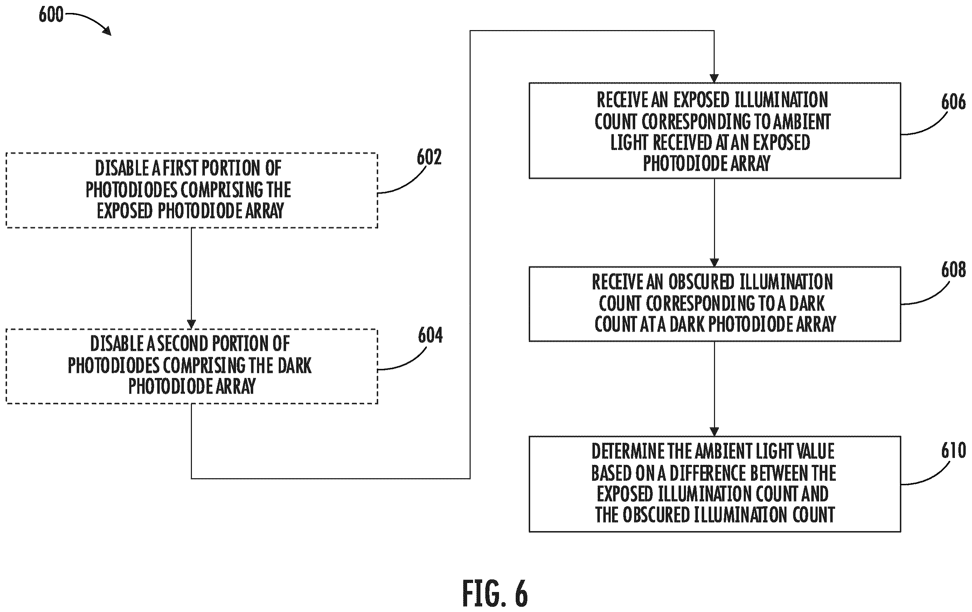

Referring now to FIG. 6, an example method 600 for determining an ambient light value (e.g., ambient light value 114) at a controller (e.g., controller 106) of ambient light sensor (e.g., ambient light sensor 100, 200, 400) is provided. At block 602, in some embodiments, the controller disables a first portion of avalanche photodiodes comprising the exposed avalanche photodiode array (e.g., exposed avalanche photodiode array 102). As described herein, the ambient light sensor may store or have access to an avalanche photodiode memory map (e.g., avalanche photodiode memory map 108) associating one or more avalanche photodiodes in the exposed avalanche photodiode array with an observed dark count rate. The observed dark count rate may be determined based on dark count rate measurements of the avalanche photodiodes comprising the exposed avalanche photodiode array during a calibration period.

During operation, the controller may select a first portion of the avalanche photodiodes comprising the exposed avalanche photodiode array to be disabled based on the observed dark count rate associated with the avalanche photodiodes. In some embodiments, a size of the first portion of disabled avalanche photodiodes may be determined based on a percentage of the overall number of the avalanche photodiodes comprising the exposed avalanche photodiode array. For example, a disabled avalanche photodiode cutoff value (e.g., disabled avalanche photodiode cutoff value 552, 554, 556) may be selected. In such an example, the avalanche photodiodes with the highest observed dark count rates up to the size of the first portion of disabled avalanche photodiodes are disabled.

At block 604, in some embodiments, the controller disables a second portion of avalanche photodiodes comprising the dark avalanche photodiode array (e.g., dark avalanche photodiode array 104). As described herein, the avalanche photodiode memory map may associate one or more avalanche photodiodes in the dark avalanche photodiode array with an observed dark count rate. The observed dark count rate may be determined based on dark count rate measurements of the avalanche photodiodes comprising the dark avalanche photodiode array during a calibration period.

During operation, the controller may select a second portion of the avalanche photodiodes comprising the dark avalanche photodiode array to be disabled based on the observed dark count rate associated with the avalanche photodiodes. In some embodiments, a size of the second portion of disabled avalanche photodiodes may be determined based on a percentage of the overall number of the avalanche photodiodes comprising the dark avalanche photodiode array. For example, a disabled avalanche photodiode cutoff value (e.g., disabled avalanche photodiode cutoff value 552, 554, 556) may be selected. In such an example, the avalanche photodiodes with the highest observed dark count rates up to the size of the second portion of disabled avalanche photodiodes are disabled.

In some embodiments, the size of the first portion of disabled avalanche photodiodes and the size of the second portion of disabled avalanche photodiodes may be equivalent. Disabling a portion of avalanche photodiodes with the highest observed dark count rates may lower the noise present in the determination of an ambient light value (e.g., ambient light value 114).

At block 606, the controller receives an exposed illumination count (e.g., exposed illumination count 110) corresponding to ambient light received at an exposed avalanche photodiode array (e.g., exposed avalanche photodiode array 102), wherein the exposed avalanche photodiode array is positioned to receive the ambient light from an external environment.

As described herein, the exposed avalanche photodiode array may include a plurality of avalanche photodiodes positioned in a two-dimensional pattern across a surface exposed to ambient light in an external environment. Each avalanche photodiode may generate an output voltage pulse (e.g., exposed photon event) in an instance in which one or more photons encounters the avalanche photodiode. In addition, each avalanche photodiode may generate dark count events corresponding to an output voltage pulse in an instance in which no light is incident on the avalanche photodiode. The exposed photon events (including both positive photon events and dark count events) for each of the avalanche photodiodes comprising the exposed avalanche photodiode array are added and transmitted as the exposed illumination count.

At block 608, the controller receives a dark illumination count (e.g., dark illumination count 111) corresponding to a dark count at a dark avalanche photodiode array (e.g., dark avalanche photodiode array 104), wherein the dark avalanche photodiode array is obscured from the ambient light. As further described herein, the ambient light sensor includes a dark avalanche photodiode array comprising an array of avalanche photodiodes obscured from receiving light. For example, in some embodiments, the dark avalanche photodiode array may be covered by a metallic plate or layer. The obscured avalanche photodiodes of the dark avalanche photodiode array continue to generate dark photon events. Since the dark avalanche photodiode array is receiving no light, the dark photon events correspond to a dark count, or in other words, dark count events in which an output voltage pulse is generated in an instance in which no light is incident on the avalanche photodiode. The dark photon events (representing the dark count of the dark avalanche photodiode array) for each of the avalanche photodiodes comprising the dark avalanche photodiode array are added and transmitted as the dark illumination count.

At block 610, the controller determines the ambient light value based on a difference between the exposed illumination count and the dark illumination count. As described herein, the exposed illumination count includes exposed photon events comprising both positive photon events and dark count events. The dark illumination count includes dark photon events comprising only dark count events because the dark avalanche photodiode array is obscured from receiving light. By subtracting the dark illumination count from the exposed illumination count, the effect of dark count events on the exposed illumination count is mitigated. In addition, since the dark count rate changes with change in temperature and with age, subtracting the dark illumination count from the exposed illumination count, enables the ambient light sensor to be resilient to temperature change and reliability drift over time.

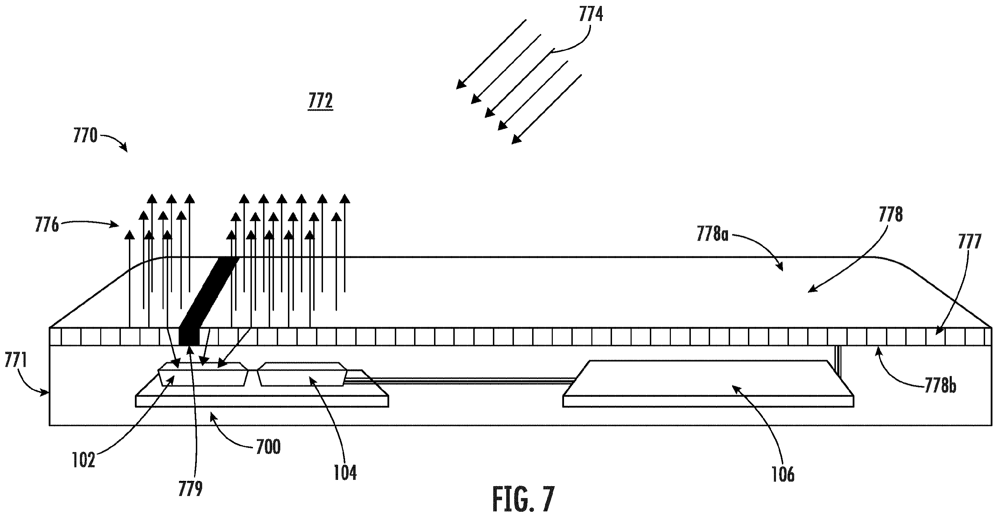

Referring now to FIG. 7, an example electronic device 770 comprising an ambient light sensor 700 is provided. As depicted in FIG. 7, the example electronic device 770 includes a housing 771 and a display screen 778 defining an enclosed area in which the ambient light sensor 700 and a controller 106 are disposed. The controller 106 is electrically coupled to the ambient light sensor 700 to receive at least exposed illumination counts and dark illumination counts. The controller 106 is further electrically connected to the display screen 778.

As further depicted in FIG. 7, the display screen 778 comprises a first side 778a configured to emit transmitted light 776 via a plurality of display pixels 777 into the external environment 772 and a second side 778b opposite the first side 778a. As further depicted in FIG. 7, the ambient light sensor 700 includes an exposed avalanche photodiode array 102 exposed to ambient light 774 from the external environment 772 and a dark avalanche photodiode array 104 obscured from the ambient light 774. During refresh of the display screen 778, a portion of the display pixels 777 are unlit (e.g., unlit display pixels 779).

As depicted in FIG. 7, the example electronic device 770 is any electronic device including a housing 771 wherein a portion of the housing 771 includes a display screen 778. As further depicted in FIG. 7, the electronic device 770 includes an ambient light sensor 700 comprising an exposed avalanche photodiode array 102 and a dark avalanche photodiode array 104 for purposes of determining an ambient light value associated with the ambient light 774 present in a external environment 772. In some non-limiting examples, the electronic device 770 may comprise a mobile phone, laptop, television, monitor, computer, wearable electronic device, or other mobile device.

As further depicted in FIG. 7, the example electronic device 770 includes a housing 771. The housing 771 may be any structure, packaging, case, or similar mechanism designed to provide a protective enclosure for the internal components of the electronic device 770, for example, including the ambient light sensor 700 and the controller 106. In some embodiments, the housing 771 together with the display screen 778 define an enclosed area.

As further depicted in FIG. 7, the electronic device 770 includes a display screen 778 comprising a plurality of display pixels 777 configured to emit transmitted light 776. A display screen 778 may be any digital display, screen, monitor, or other device configured to output information in visual form via transmitted light 776 based on a received electronic signal. A display screen 778 may be transparent or semitransparent to certain wavelengths of light, such that ambient light 774 may be received by an ambient light sensor 700 behind or under the display screen 778. In some non-limiting examples, the display screen 778 may comprise an organic light-emitting diode (OLED), active-matrix OLED (AMOLED) display, or other similar variation.

In some embodiments, the display screen 778 may comprise a plurality of display pixels 777. Display pixels 777 may be the smallest unit of display in a display screen 778. A display pixel 777 may be configured to output an intensity of light or a combination of light intensities based on an electronic signal indicating a desired output. For example, in some embodiments, each pixel of a display screen 778 may emit a red, green, and blue color at different intensities to generate a specific color from the display pixel 777.

The plurality of display pixels 777 may be illuminated in a coordinated manner to generate a display image. For example, in some embodiments, the display pixels 777 may be refreshed one row at a time and move sequentially from one side of the display to the other. Due to the speed of refresh, the display screen 778 may appear to be fully illuminated. During the refresh process, one or more rows of unlit display pixels 779 may move from a first side of the display screen 778 to a second side of the display screen 778 opposite the first side. In an instance in which the ambient light sensor 700 is positioned within the housing 771 and under the display screen 778, during the refresh of the display screen 778, the row and/or rows of display pixels 777 directly above the ambient light sensor 700 may be unlit, as shown in FIG. 7 as unlit display pixels 779. In some embodiments, the exposure window of the ambient light sensor 700 may be timed such that the exposed illumination count 110 and the dark illumination count 111 are accumulated and/or aggregated in the instances in which the unlit display pixels 779 of the display screen 778 refresh are directly or partially above the ambient light sensor 700. Timing the exposure windows with the refresh of the display screen 778 enables the ambient light sensor 700 to better isolate the ambient light 774 in the external environment 772.

In some embodiments, the electronic device 770 is configured to adjust various settings of the electronic device 770 and connected component based on the ambient light value determined by the ambient light sensor 700 and controller 106. For example, capture settings of a digital camera may be adjusted based on the ambient light value indicating the amount of ambient light 774 in the external environment 772 in which an image is captured. Similarly, display screen 778 settings of a mobile device (e.g., screen brightness) may be adjusted based on the ambient light 774 in the external environment 772 in which the display screen 778 is viewed.

Referring now to FIG. 8, an example block diagram depicted example components of a controller 106 in accordance with an example embodiment of the present disclosure is provided. FIG. 8 illustrates an example controller 106 in accordance with at least some example embodiments of the present disclosure. The controller 106 includes processor 802, input/output circuitry 804, data storage media 806, and communications circuitry 808. In some embodiments, the controller 106 is configured, using one or more of the sets of circuitry 802, 804, 806, and/or 808, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the controller 106 provide or supplement the functionality of other particular sets of circuitry. For example, the processor 802 in some embodiments provides processing functionality to any of the sets of circuitry, the data storage media 806 provides storage functionality to any of the sets of circuitry, the communications circuitry 808 provides network interface functionality to any of the sets of circuitry, and/or the like.

In some embodiments, the processor 802 (and/or co-processor or any other processing circuitry assisting or otherwise associated with the processor) is/are in communication with the data storage media 806 via a bus for passing information among components of the controller 106. In some embodiments, for example, the data storage media 806 is non-transitory and may include, for example, one or more volatile and/or non-volatile memories. In other words, for example, the data storage media 806 in some embodiments includes or embodies an electronic storage device (e.g., a computer readable storage medium). In some embodiments, the data storage media 806 is configured to store information, data, content, applications, instructions, or the like, for enabling the controller 106 to carry out various functions in accordance with example embodiments of the present disclosure.

The processor 802 may be embodied in a number of different ways. For example, in some example embodiments, the processor 802 includes one or more processing devices configured to perform independently. Additionally or alternatively, in some embodiments, the processor 802 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 106, and/or one or more remote or "cloud" processor(s) external to the controller 106.

In an example embodiment, the processor 802 is configured to execute instructions stored in the data storage media 806 or otherwise accessible to the processor. Alternatively or additionally, the processor 802 in some embodiments is configured to execute hard-coded functionality. As such, whether configured by hardware or software methods, or by a combination thereof, the processor 802 represents an entity (e.g., physically embodied in circuitry) capable of performing operations according to an embodiment of the present disclosure while configured accordingly. Alternatively or additionally, as another example in some example embodiments, when the processor 802 is embodied as an executor of software instructions, the instructions specifically configure the processor 802 to perform the algorithms embodied in the specific operations described herein when such instructions are executed.

In some embodiments, the controller 106 includes input/output circuitry 804 that provides output to the user and, in some embodiments, to receive an indication of a user input. In some embodiments, the input/output circuitry 804 is in communication with the processor 802 to provide such functionality. The input/output circuitry 804 may comprise one or more user interface(s) (e.g., user interface) and in some embodiments includes a display that comprises the interface(s) rendered as a web user interface, an application user interface, a user device, a backend system, or the like. The processor 802 and/or input/output circuitry 804 comprising the processor may be configured to control one or more functions of one or more user interface elements through computer program instructions (e.g., software and/or firmware) stored on a memory accessible to the processor (e.g., data storage media 806, and/or the like). In some embodiments, the input/output circuitry 804 includes or utilizes a user-facing application to provide input/output functionality to a client device and/or other display associated with a user.

In some embodiments, the controller 106 includes communications circuitry 808. The communications circuitry 808 includes any means such as a device or circuitry embodied in either hardware or a combination of hardware and software that is configured to receive and/or transmit data from/to a network and/or any other device, circuitry, or module in communication with the controller 106. In this regard, the communications circuitry 808 includes, for example in some embodiments, a network interface for enabling communications with a wired or wireless communications network. Additionally or alternatively in some embodiments, the communications circuitry 808 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 808 includes circuitry for interacting with the antenna(s) and/or other hardware or software to cause transmission of signals via the antenna(s) or to handle receipt of signals received via the antenna(s). In some embodiments, the communications circuitry 808 enables transmission to and/or receipt of data from a client device in communication with the controller 106.

Additionally or alternatively, in some embodiments, one or more of the sets of circuitry 802-914 are combinable. Additionally or alternatively, in some embodiments, one or more of the sets of circuitry perform some or all of the functionality described associated with another component. For example, in some embodiments, one or more sets of circuitry 802-808 are combined into a single module embodied in hardware, software, firmware, and/or a combination thereof. Similarly, in some embodiments, one or more of the sets of circuitry is/are combined such that the processor 802 performs one or more of the operations described above with respect to each of these circuitry individually.

While this detailed description has set forth some embodiments of the present invention, the appended claims cover other embodiments of the present invention which differ from the described embodiments according to various modifications and improvements. For example, one skilled in the art may recognize that such principles may be applied to any electronic device configured to detect ambient light in an environment. For example, a mobile communication device, laptop display, television, monitor, computer, wearable electronic device, camera, and so on.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. An apparatus comprising:
∘ a first avalanche photodiode array;
∘ a second avalanche photodiode array obscured from ambient light in an external environment; and
∘ a controller configured to:
• receive a first illumination count corresponding to the ambient light received at the first avalanche photodiode array;
• receive a second illumination count at the second avalanche photodiode array; and
• determine an ambient light value based on a difference between the first illumination count and the second illumination count.

2. The apparatus according to claim 1, wherein the first avalanche photodiode array is positioned to receive the ambient light from the external environment.

3. The apparatus according to claim 1 or 2, wherein the controller is further configured to:
• disable a first portion of avalanche photodiodes comprising the first avalanche photodiode array; and
• disable a second portion of avalanche photodiodes comprising the second avalanche photodiode array.

4. The apparatus according to claim 3, wherein a first portion size corresponding to the first portion of avalanche photodiodes is equal to a second portion size corresponding to the second portion of avalanche photodiodes.

5. The apparatus according to claim 4, wherein the first portion size is based on a first avalanche photodiode array size.

6. The apparatus according to claim 4 or 5, wherein the first portion size is based on a percentage of a first avalanche photodiode array size, and wherein the percentage is between 15% and 35% of the first avalanche portion size.

7. The apparatus according to any one of the claims 4 to 6, wherein the first portion of avalanche photodiodes is based on a dark count rate associated with each first avalanche photodiode comprising the first avalanche photodiode array; and the second portion of avalanche photodiodes is based on the dark count rate associated with each second avalanche photodiode comprising the second avalanche photodiode array.

8. The apparatus according to claim 7, further comprising:
∘ an avalanche photodiode memory map configured to store the dark count rate for one or more avalanche photodiodes comprising the first avalanche photodiode array and the second avalanche photodiode array.

9. The apparatus according to claim 8, wherein the avalanche photodiode memory map is initialized during a configuration process.

10. The apparatus according to any one of claims 4 to 9, wherein the controller is further configured to dynamically update the first portion size.

11. The apparatus according to any one of claims 4 to 10, wherein the controller is further configured to dynamically enable and dynamically disable avalanche photodiodes comprising the first portion of avalanche photodiodes and the second portion of avalanche photodiodes based on the first portion size and the second portion size.

12. The apparatus according to any one of claims 1 to 12, further comprises a metallic layer obscuring the second avalanche photodiode array.

13. A computer-implemented method for determining an ambient light value, the computer-implemented method comprising:
∘ receiving a first illumination count corresponding to ambient light received at a first avalanche photodiode array,
• wherein the first avalanche photodiode array is positioned to receive the ambient light from an external environment;
∘ receiving a second illumination count at a second avalanche photodiode array,
• wherein the second avalanche photodiode array is obscured from the ambient light; and
o determining the ambient light value based on a difference between the first illumination count and the second illumination count.

14. The computer-implemented method according to claim 13, further comprising:
o∘ disabling a first portion of avalanche photodiodes comprising the first avalanche photodiode array; and
∘ disabling a second portion of avalanche photodiodes comprising the second avalanche photodiode array.

15. An electronic device comprising:
∘ a housing;
∘ a display screen attached to the housing, the display screen comprising:
• a first side configured to emit transmitted light via a plurality of display pixels into an external environment; and
∘ an ambient light sensor disposed within the housing, opposite the first side of the display screen, the ambient light sensor comprising said apparatus according to any one of the claims 1 to 12,
• the first avalanche photodiode array being positioned to receive ambient light from the external environment.
